(19) Europäisches Patentamt
European Patent Office
Office européen des brevets

(11) Veröffentlichungsnummer: **0 482 483 A2**

(12) **EUROPÄISCHE PATENTANMELDUNG**

(21) Anmeldenummer: **91117602.2**

(22) Anmeldetag: **16.10.91**

(51) Int. Cl.5: **C08L 77/00**, C08L 63/00, //(C08L77/00,63:00),(C08L63/00, 77:00)

(30) Priorität: **20.10.90 DE 4033480**

(43) Veröffentlichungstag der Anmeldung: **29.04.92 Patentblatt 92/18**

(84) Benannte Vertragsstaaten: **CH DE FR GB IT LI NL**

(71) Anmelder: **ATOCHEM Deutschland GmbH**
**Siemensstrasse 21**
**W-5300 Bonn 1(DE)**

(72) Erfinder: **Hapelt, Karl-Heinz, Ing.Grad.**
**Im Ellig 67**
**W-5300 Bonn 1(DE)**
Erfinder: **De Jong, Eduard, Ing.grad.**
**Mirabellengarten 3**
**W-5210 Troisdorf Eschmar(DE)**
Erfinder: **Kohl, Paul, Dr.Dipl.-Ing.Chem.**
**Chatteauneufstrasse 18**
**W-5305 Alfter-Oedekoven(DE)**
Erfinder: **Pahl, Andreas, Dr. Dipl.-Chem.**
**Siebenbürgenerstrasse 44**
**W-5300 Bonn 1(DE)**

(74) Vertreter: **Türk, Dietmar, Dr. rer. nat. et al**
**Türk, Gille + Hrabal Patentanwälte**
**Brucknerstrasse 20**
**W-4000 Düsseldorf 13(DE)**

(54) **Heisssiegeln von Textilien.**

(57) Die vorliegende Erfindung betrifft die Verwendung eines Reaktionsproduktes aus niedrigmolekularen Polyamiden und Diepoxiden zum Heißsiegeln von Textilien, insbesondere zum Heißsiegeln von silikonisierten Textilien.

EP 0 482 483 A2

Die vorliegende Erfindung betrifft die Verwendung eines Reaktionsproduktes aus niedrigmolekularen Polyamiden und Diepoxiden zum Heißsiegeln von Textilien.

In der Textilindustrie finden Heißschmelzkleber bei der Verklebung von textilen Materialien breite Verwendung. In den meisten Fällen werden die zu verklebenden Textilien mit Beschichtungsmitteln versehen, die dem Gewebe beispielsweise einen besseren Griff geben oder sie wasserabstoßend machen. Letztere Eigenschaft wird beispielsweise durch Silikonisieren des Gewebes erreicht. Diese Art der Beschichtung hat jedoch eine Verringerung der Hafteigenschaften der Heißschmelzkleber auf dem beschichteten Gewebe zur Folge. Versuche zur Verbesserung der Haftung auf silikonisierten Stoffen wurden in der DE-B-29 20 416 und DE-A-32 48 776 veröffentlicht.

DE-B-29 20 416 beschreibt einen pulverförmig einsetzbaren Schmelzkleber zum Heißsiegeln von Textilien, der aus einem Gemisch von ausgewählten Polyamiden mit höherem und niedrigerem Schmelzpunkt in bestimmten Anteilen besteht.

In der DE-A-32 48 776 werden zur Herstellung von Heißschmelzklebern neben Lactamen $C_6$ bis $C_{12}$-Dicarbonsäuren und aliphatische $C_6$ bis $C_{12}$-Diamine verwendet, wobei mindestens 30 Gew.-% dieser Diamine aus einfachverzweigten aliphatischen Diaminen mit 6 Kohlenstoffatomen bestehen.

Eine Verbesserung der Hafteigenschaften an silikonisiertem Gewebe wird in der DE-A-37 30 504 offenbart, worin Polyamide aus Caprolactam, Laurinlactam und einem Addukt aus äquimolaren Mengen Piperazin und $C_6$ bis $C_{13}$-Dicarbonsäuren oder $C_{36}$-dimerisierten Fettsäuren beschrieben sind, die als Heißschmelzkleber verwendet werden können.

Cokondensate von Polyamiden mit bestimmten organofunktionellen Polysiloxanen sind bekannt. So werden in der US-A-4 346 200 die verbesserte Zugfestigkeit und Kerbschlagzähigkeit von Formmassen aus Polyamiden und elastomeren Blockpolyamiden beschrieben, wobei deren Elastomersegmente auch Poly-$C_1$ bis $C_4$-Dialkylen-Siloxane enthalten. Nach EP-A-54 426 und DE-A-2 120 961 lassen sich die Oberflächeneigenschaften und Verarbeitbarkeit von Polyamiden durch den Einbau von Siloxansequenzen günstig beeinflussen.

Die DE-A-35 45 905 beschreibt die Ester- oder Amid-Verknüpfung von Polyamid- und Siloxanblöcken mit einer maximalen $(SiR_2O)_n$ Kettenlänge von n = 50 (gegebenenfalls sind mehrere dieser Blöcke über Sauerstoff und organische Reste zu längeren Einheiten verknüpft), zu Polymeren mit einem I-Wert von 10 bis 600, die unter anderem zu verbesserter Festigkeit, Hydrolyse- und Chemikalienbeständigkeit in den Polymeren führen soll.

Die EP-A-269 833 offenbart thermoplastische Polyamidmassen aus Copolyamiden, die relativ langkettige Polydiorganosiloxancarbonamid-Einheiten eingebaut enthalten, bei welchen die organofunktionellen Reste über Sauerstoff an die Siloxanreste gebunden sind.

Alle zuvor genannten Schriften offenbaren die Verwendung von oligomeren Basiskomponenten, und ihnen lagen als Aufgabenstellung im weiteren die Verbesserung der Hafteigenschaften bei unbeschichteten Stoffen zugrunde.

Eine Verbesserung der Hafteigenschaften der Polyamide an silikonisierten und andersartig beschichteten Stoffen wird beschrieben in der DE-A-39 08 954. Deren Gegenstand sind Polyamid-Siloxan-Copolymere, die erhältlich sind durch gemeinsame Kondensation und Polymerisation auf an sich bekannte Weise von $\omega$-Amino-Alkylcarbonsäuren mit 6, 11 oder 12 Kohlenstoffatomen und/oder deren Lactamen, von äquimolaren Mengen von Diaminen und Dicarbonsäuren und in einer Menge von 0,5 Gew.-% bis zu 15 Gew.-%, bezogen auf das Gesamtgewicht der eingesetzten Komponenten im Ausgangsgemisch anstelle der entsprechenden äquivalenten Menge Diamine, von copolymerisierbaren Siloxanmonomeren.

Die EP-B-174 225 offenbart eine reaktive Zusammensetzung, die als reaktive Bestandteile eine Polyepoxidverbindung und ein semikristallines Polyamid-Oligomer enthält. Sie enthält jedoch keinen Hinweis darauf, daß ein Copolymer aus Polyamiden und Diepoxiden geeignet zum Heißsiegeln von Textilien ist.

Die Aufgabe der vorliegenden Erfindung bestand nun darin, das Problem der verschlechterten Hafteigenschaften von Copolyamiden oder copolyamidhaltigen Heißschmelzkleber-Zusammensetzungen auf Textilien, insbesondere auf silikonisierten oder anders beschichteten Textilien, zu lösen.

Seitens der Erfinder wurde nun überraschend gefunden, daß eine Heißschmelzkleber-Zusammensetzung aus niedrigmolekularen Polyamiden und Diepoxiden zum Heißsiegeln von Textilien, insbesondere zum Heißsiegeln von beschichteten, insbesondere silikonisierten Geweben hervorragend zu verwenden ist.

Gegenstand der Erfindung ist daher die Verwendung eines Reaktionsproduktes aus niedrigmolekularen Polyamiden und Diepoxiden zum Heißsiegeln von Textilien, das dadurch gekennzeichnet ist, daß das Reaktionsprodukt erhältlich ist durch Umsetzung von folgenden Komponenten:

(A) Polyamiden mit einem Schmelzpunkt von 70 bis 140°C und mit nur einer terminalen primären oder sekundären Aminogruppe pro Molekül, die folgende Grundbausteine enthält:

1. bis zu 40 Gew.-% Aminocapronsäure und/oder deren Lactamform
2. bis zu 45 Gew.-% Aminoundekansäure
3. bis zu 45 Gew.-% Laurinlactam
4. bis zu 85 Gew.-% äquimolaren Mengen primärer und/oder sekundärer $C_2$ - $C_{20}$-Diamine und/oder Etherdiamine und aliphatischer $C_2$ - $C_{44}$-Dicarbonsäuren, die in einer Menge von bis zu 20 Gew.%, bezogen auf das Gesamtgewicht der Dicarbonsäuren, durch aromatische Dicarbonsäuren ersetzt sein können,

wobei die niedrigmolekularen Polyamide (A) ein Molekulargewicht ($\overline{Mn}$) von 1000 bis 10000 haben, das durch Zusatz von monofunktionellen $C_4$ -$C_{24}$-Aminen zur Ausgangsmischung der Grundbausteine eingestellt wird, und mindestens zwei der vier Grundbausteine zur Herstellung der Copolyamide verwendet werden, wobei die Grundbausteine (A1) bis (A4) zusammen 100 Gew.-% der Komponente (A) ergeben, und

(B) Diepoxiden, die ausgewählt werden aus der Gruppe, die besteht aus

1. Diepoxiden der allgemeinen Formel

E - D - E

wobei E ein Epoxidrest mit 2 bis 10 Kohlenstoffatomen bedeutet, und D ein aliphatischer Rest mit 2 bis 20 Kohlenstoffatomen, ein aromatischer und/oder alicyclischer Rest mit 6 bis 30 Kohlenstoffatomen oder

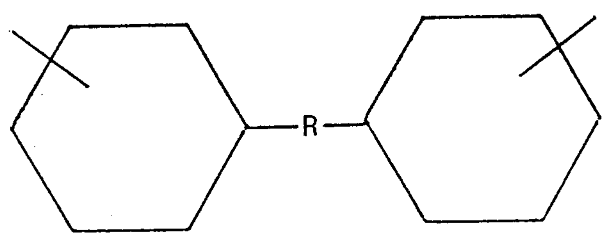

bedeutet, wobei R für

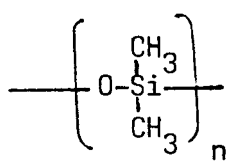 ,

worin n eine Zahl von 5 bis 30 ist, oder $-C(CH_3)_2-$, $-C_mH_{2m}-$ oder $-(C_mH_{2m})-O-$ steht, worin m eine Zahl von 2 bis 4 ist;

2. Diepoxiden auf Basis von Bisphenol A und Epichlorhydrin mit einem Molekulargewicht ($\overline{Mn}$) von 340 bis 3000;
3. $\alpha,\omega$-Diepoxipolypropylen- oder -ethylenglykolen mit einem Molekulargewicht ($\overline{Mn}$) von 500 bis 3000;
4. $\alpha,\omega$-Diglycidylpolydimethylsiloxanen mit einem Molekulargewicht ($\overline{Mn}$) von 800 bis 5000;

und das Mengenverhältnis der niedrigmolekularen Polyamide (A) zu den Diepoxiden (B) so ausgewählt wird, daß das molekulare Verhältnis von reagierenden Aminogruppen der Komponente (A) zu den mit den Aminogruppen reagierenden Epoxidgruppen der Komponente (B) im Falle von primären Aminen 1:0,5 bis 1:1 und im Falle von sekundären Aminen 1:0,8 bis 1:2 beträgt.

Der Schmelzpunkt der Polyamide (A) wird bestimmt nach DIN 53736/B. Die untere Grenze des Schmelzpunktes liegt bevorzugt bei etwa 80°C. Andererseits liegt die obere Grenze bevorzugt bei etwa 130°C.

Bei Einsatz eines Gemisches von primären und sekundären Aminen muß unter Berücksichtigung von deren Mengen und der obigen Definition hinsichtlich der Mengenverhältnisse der Komponente (A) zur Komponente (B) die Menge der Komponente (B) entsprechend der obigen Definition ausgerechnet werden,

so daß also auf die eingesetzte Menge von primären Aminen die entsprechende Menge Komponente (B) und auf die eingesetzte Menge von sekundären Aminen die dazugehörige Menge der Komponente (B) eingesetzt wird.

Die niedrigmolekularen Polyamide (A) werden dabei auf an sich bekannte Weise vorpolymerisiert. Dazu werden die einzelnen Komponenten (A1) bis (A4), soweit eingesetzt, in den entsprechenden Mengenverhältnissen, sowie eine geeignete Menge an monofunktionellen Aminen zur Einstellung des gewünschten Molekulargewichts im Reaktionsgefäß vorgelegt und unter den bei der Herstellung von Polyamiden üblichen Bedingungen kondensiert und polymerisiert, so daß sich eine statistische Verteilung der einzelnen Monomerbestandteile über das Polymermolekül ergibt. Dabei können die Ausgangskomponenten auch in den entsprechenden Mengenverhältnissen in einer wässrigen Dispersion, bzw. in Form einer wässrigen Lösung eingesetzt werden. Die benutzten Techniken und Verfahrensschritte sind auf dem Gebiet der Polyamidsynthesen üblich. Es wird dabei unter den üblichen Reaktionsbedingungen unter Anwendung von erhöhter Temperatur und Druck gearbeitet. Bevorzugt wird dabei die Vorkondensationsphase, bei der sich im Autoklaven als Reaktionsgefäß bei den angewandten Temperaturen durch das im Reaktionsgemisch vorhandene und/oder daß bei der Reaktion abgespaltene Wasser ein erhöhter Druck einstellt, wobei Temperaturen von 220 bis 300°C angewandt werden. Die Nachkondensationsphase wird bei Temperaturen von 220 bis 300°C unter Normaldruck oder vermindertem Druck durchgeführt. Als Vorkondensationsphase wird dabei die Phase der Reaktion bezeichnet, innerhalb der die Kondensation und Polymerisation der Ausgangskomponenten nur bis zu einem bestimmten Polymerisationsgrad abläuft, im Reaktionsgemisch aber noch nicht abreagierte Ausgangskomponenten als Monomere oder Oligomere vorliegen. Die Nachkondensationsphase ist die sich an die Vorkondensationsphase anschließende, bis zum vollständigen Ablauf der Kondensation und Polymerisation bis zum gewünschten Molekulargewicht ablaufende Phase.

Zur Herstellung der niedrigmolekularen Polyamide (A) werden dabei als Grundbausteine bis zu 40 Gew.-% Aminocarbonsäure und/oder deren Lactamform als Komponente (A1), bis zu 45 Gew.-% 11-Aminoundekansäure als Komponente (A2) und bis zu 45 Gew.-% Laurinlactam als Komponente (A3) eingesetzt. Als Komponente (A4) werden dabei in einer Menge von bis zu 85 Gew.-% äquimolare Mengen bifunktioneller primärer und/oder sekundärer $C_2$-$C_{20}$ Diamine und/oder Etheramine und bifunktionelle primäre $C_2$-$C_{44}$ Polycarbonsäuren eingesetzt. Als Diaminkomponente der Komponente (A4) sind cyclische und acyclische aliphatische Diamine, sowie dicyclische aliphatische Diamine, deren Ringe über verzweigte oder gradkettige Alkylenreste mit 1 bis 6 Kohlenstoffatomen verknüpft sein können, sowie entsprechende Etheramine verwendbar. Beispiele sind Hexamethylendiamin, Piperazin, Isophorondiamin, Dodecandiamin, Methylpentamethylendiamin, Trimethylhexamethylendiamin sowie Di(4-Aminocyclohexyl)methan, 1,2-Di(4-Aminocyclohexyl)methan, 2,2-Di(4-Aminocyclohexyl)propan. Als Diamine können ebenso aromatische Diamine wie Diaminoalkyl-substituierte Benzolderivate wie Diamino-p-Xylylen, Orthophenylendiamin, Methaphenylendiamin, Paraphenylendiamin, 4,4'-Diamino-Diphenylmethan, 1,2-(4,4'-Diaminodiphenyl)ethan, 2,2-(4,4'-Diaminodiphenyl)propan eingesetzt werden.

In der Komponente (A4) werden die Diamine in äquimolarer Menge zu den Dicarbonsäuren eingesetzt. Das bedeutet, daß für jede Aminogruppe der Diaminkomponente eine Carboxylgruppe in der Dicarbonsäure vorhanden ist.

Als Dicarbonsäuren können die üblicherweise bei der Herstellung von Polyamiden eingesetzten, vorzugsweise gradkettigen Dicarbonsäuren verwendet werden. Beispielhaft werden hier genannt Alkylendicarbonsäuren mit 4 bis 10 Methyleneinheiten wie Adipinsäure, Azelainsäure, Sebacinsäure und Decandicarbonsäure, dimerisierte Fettsäuren mit bis zu 44 Kohlenstoffatomen, sowie aromatische Dicarbonsäuren wie Phthalsäure, Isophthalsäure und Terephthalsäure.

In einem zweiten Schritt werden die vorpolymerisierten niedrigmolekularen Polyamide (A) mit Diepoxiden umgesetzt.

Gegenwärtig ist eine große Anzahl an organischen Verbindungen im Handel und in der wissenschaftlichen und technischen Literatur bekannt, die dieser Definition entsprechen und deren Strukturen sehr vielfältig sind. Die am häufigsten verwendeten Verbindungen sind solche, die aus der Reaktion von Bisphenol-A mit Epichlorhydrin sich ableiten, und im besonderen die Verbindungen, die aus der Addition von zwei Molekülen Epichlorhydrin zu einem Molekül Bisphenol-A resultieren; das sind die Diglycidylether von Bisphenol-A (DGEBA).

Für das erfindungsgemäß verwendete Reaktionsprodukt können als Komponente (B1) Diepoxide der allgemeinen Formel

E-D-E

wobei E ein Epoxidrest mit 2 bis 4 Kohlenstoffatomen bedeutet, und D ein aliphatischer Rest mit 2 bis 20 Kohlenstoffatomen, ein aromatischer und/oder alicyclischer Rest mit 6 bis 30 Kohlenstoffatomen oder

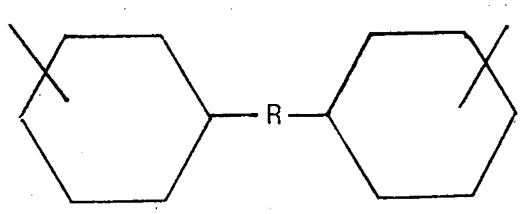

bedeutet, wobei R für

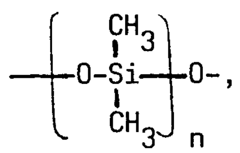

worin n eine Zahl von 5 bis 30 ist, oder $-C(CH_3)_2-$, $-C_mH_{2m}-$ oder $-(C_mH_{2m})-O-$, worin m eine Zahl von 2 bis 4 ist; verwendet werden.

Dabei ist E bevorzugt ein Epoxyethylenrest oder ein Epoxycyclobutylrest. Als Diepoxidkomponente (B1) können verschiedene, im Handel erhältliche, Produkte verwendet werden, von denen beispielhaft genannt werden RÜTAPOX CY 151® (RÜTGERSWERKE) (Diglycidyläther des 4,4'-Dihydroxydieyelohexylpropan-(1,2)).

Als Beispiele für im Handel erhältliche Diepoxypolydimethylsiloxane sind Tegomer® OF 3025 und 3010 der Firma Goldschmidt KG zu nennen.

Als Komponente (B1) können Diepoxyhexandiglycidylether mit einem Molekulargewicht im Bereich von 500 bis 3000 verwendet werden. Beispielhaft wird genannt der Verdünner H der Schering AG.

Als Komponente (B2) können Diepoxyverbindungen auf Basis von Bisphenol-A und Epichlorhydrin mit einem Molekulargewicht im Bereich von 300 bis 3000 eingesetzt werden. Darunter fallen beispielsweise die im Handel erhältlichen Produkte der Firma Shell unter dem Namen Epicote® 828, oder von Dow Chemical unter dem Namen DER 332® oder DER 331® sowie von der Firma Ciba-Geigy Araldid® GY 260.

Als Komponente (B3) werden beispielhaft die Produkte DER 732 oder DER 736 der Firma Dow Chemical sowie der Verdünner F der Schering AG genannt.

Im Rahmen der Herstellung des erfindungsgemäß zu verwendenden Reaktionsproduktes können selbstverständlich weitere im Handel erhältliche Diepoxide verwendet werden, wobei die Aufzählung der oben erwähnten Handelsprodukte nur beispielhaft ist.

Die Herstellung der Reaktionsprodukte erfolgt zweckmäßig, wie oben bereits erwähnt, im sogenannten Zwei-Stufen-Verfahren. Danach werden nach dem ersten Schritt der Herstellung der niedermolekularen Polyamide die Diepoxide zu den niedrigmolekularen Polyamiden hinzugegeben und in den üblichen Anlagen zur Synthese von Polyamiden die Addition der Diepoxide an die Polyamide durchgeführt. Der zweite Schritt ist jedoch auch in geeigneten Schmelzcompoundiermaschinen oder Reaktionsextrudern, wie Doppelschneckenextrudern, durchführbar. In jedem Fall handelt es sich bei den Reaktionsendprodukten um thermoplastische Polymere.

Das Mengenverhältnis der niedrigmolekularen Polyamide (A) und der Diepoxide (B) wird bei der Zugabe der Diepoxidkomponente zu dem Copolyamid so ausgewählt, daß das molekulare Verhältnis der reagierenden Aminogruppen der Polyamide (A) zu den mit den Aminogruppen reagierenden Epoxygruppen der Diepoxide (B) in dem definierten Bereich liegt. Wenn die Zahl der mit den Aminogruppen reagierenden Epoxygruppen der Komponente (B) im Verhältnis zu den Aminogruppen zunimmt, findet eine stärkere Vernetzung statt, und die thermoplastischen Eigenschaften der Heißschmelzkleber-Zusammensetzung verschlechtern sich.

Zur Herstellung der Reaktionsprodukte aus niedrigmolekularen Polyamiden und Diepoxiden werden bevorzugt niedrigmolekulare Polyamide mit einem Molekulargewicht von 2000 bis 6000 eingesetzt. Die Einstellung des Molekulargewichtes der niedrigmolekularen Polyamide erfolgt bevorzugt durch Zusatz von monofunktionellen C10 - C18-Aminen.

Als Diepoxid-Verbindung (B4) werden bevorzugt Diepoxypolydimethylsiloxane mit einem Molekulargewicht im Bereich von 800 bis 2100 verwendet.

Als Diepoxidverbindungen (B2) auf Basis von Bisphenol-A und Epichlorhydrin werden bevorzugt solche mit einem Molekulargewicht im Bereich von 340 bis 1000 verwendet.

Als Diepoxidverbindung (B3) werden bevorzugt solche mit einem Molekulargewicht im Bereich von 800 bis 2100 verwendet.

Das molekulare Verhältnis von reagierenden Aminogruppen der Komponente (A) zu den mit den Aminogruppen reagierenden Epoxidgruppen der Komponente (B) beträgt im Falle von primären Aminen bevorzugt mindestens 1:0,8. Im Falle von sekundären Aminen beträgt der obere Grenzwert bevorzugt 1:1,4.

Überraschenderweise zeigte die textiltechnische Untersuchung der erfindungsgemäß verwendeten Reaktionsprodukte, daß sich beschichtete Textilien, besonders vorteilhaft temperaturempfindliche beschichtete Textilien, mit Textilien gleicher oder verschiedener Art verklebt werden können. Gleichzeitig wurde festgestellt, daß auch bei erhöhter Siegeltemperatur gar keiner oder nur ein schwacher Rückschlag auftrat, verbunden mit einer nur geringen oder keiner Abnahme der Schäl-Festigkeit nach dreimaligem Waschen bzw. fünfmaliger chemischer Reinigung im Gegensatz zu den Ergebnissen der Vergleichsversuche.

Die erfindungsgemäß zum Heißsiegeln verwendeten Reaktionsprodukte werden für diesen Zweck in den meisten Fällen von hierfür geeigneten Zusammensetzungen eingesetzt, die neben den Reaktionsprodukten übliche Hilfs- und/oder Trägerstoffe enthalten. Als übliche Hilfs- und Zusatzstoffe werden die aus dem Stand der Technik bekannten Stoffe eingesetzt, z.B. Weichmacher, optische Aufheller, Farbstoffe, Verdikkungsmittel, Gleitmittel, Antioxidantien.

Bei der Verklebung wird zwischen die zu verklebenden Flächen eine solche Heißschmelzkleber-Zusammensetzung, zweckmäßig in Form eines Pulvers oder einer Dispersion, wie sie für Heißschmelzkleber üblich ist, gegeben. Anschließend werden die Textilien mit der Heißschmelzkleber-Zusammensetzung unter Anwendung von erhöhter Temperatur verpreßt. Die Preßtemperatur richtet sich dabei in erster Linie nach der Temperaturempfindlichkeit des Substrates. Da die Heißschmelzkleber-Zusammensetzungerfindungsgemäß auch schon bei niedrigen Temperaturen mit einer vorzüglichen Klebkraft besonders bei beschichteten Textilien verwendet werden kann, können niedrige Siegeltemperaturen angewendet werden, die nur geringfügig höher als die Temperaturen des Schmelzbereichs der Heißschmelzkleber-Zusammensetzung zu sein brauchen.

Beim Erkalten auf Raumtemperatur tritt Verfestigung unter Verbindung der verklebten Textilien ein. Die Heißschmelzkleber-Zusammensetzung kann in Form von Pulvern mit in der Beschichtungsindustrie üblichen Pulverauftragsmaschinen, oder in Form von Heißsiegeldispersionen nach dem Pastenpunkt-Verfahren auf zu verklebende Textilien aufgebracht werden. Dabei ist es auch möglich, nur ausgewählte Flächenbereiche der Textilien mit der Heißschmelzkleber-Zusammensetzung zu versehen. Seitens der Erfinder wurde überraschend gefunden, daß die erfindungsgemäß zu verwendende Heißschmelzkleber-Zusammensetzung neben den hervorragenden Klebeeigenschaften zu beschichteten Textilien auch hervorragende Laufeigenschaften bei der Beschichtung mit dem Pulverpunkt-Verfahren besitzt.

Beispiele für die zu verklebenden Textilmaterialien sind neben den beschichteten Stoffen auch Naturstoffe wie Wolle, Seide und Baumwolle, bzw. Kunststoffpolyester und Polyamide und diese enthaltende Textilmischgewebe, sowie die entsprechend beschichteten Textilien aus den gleichen Materialien wie zuvor genannt.

Die erfindungsgemäße Verwendung zum Heißsiegeln von Textilien erfolgt vorzugsweise in Form von Dispersionen. Solche -im wesentlichen wässrigen-Dispersionen sind auf dem Gebiet der Textil-Heißschmelzkleber allgemein bekannt. Es wird Bezug genommen auf die DE-A-24 07 505 und die darin als Stand der Technik genannten Druckschriften.

Die folgenden Beispiele erläutern die vorliegende Erfindung.

Die Vergleichsversuche sind unter Verwendung von Reaktionsbedingungen bzw. Reaktionspartnern aus dem nächstliegenden Stand der Technik durchgeführt worden.

Beispiel 1

In einen handelsüblichen Autoklaven wurden folgende Monomere eingewogen:

| | |
|---|---|
| 3000 g | Caprolactam |
| 1138,5 g | Hexamethylendiamin |
| 3000 g | 11-Aminoundekansäure |
| 3000 g | Laurinlactam |
| 1861,4 g | Azelainsäure |
| 545 g | Octadecylamin |

500 g Wasser

Der beladene Autoklav wurde unter Luftabschluß auf 290°C aufgeheizt, wobei sich ein Innendruck von 25 bar einstellte. Bei einer Temperatur von 180°C wurde das Rührwerk auf 50 UpM eingestellt. Nach Erreichen der Temperatur von 290°C wurde zwei Stunden bei 25 bar vorkondensiert. Danach wurde innerhalb von 90 Minuten der Druck auf Normaldruck reduziert und die Temperatur auf 140°C abgesenkt. Anschließend wurde unter leichtem Spülen mit Stickstoffgas 30 Minuten nachkondensiert. Danach wurden innerhalb von 10 Minuten

294 g Diepoxid DER 921 der Fa. Dow Chemicals

zu der im Autoklaven befindlichen Polyamidschmelze mit einem Molekulargewicht von 6300 zugegeben.

Das Verhältnis der $NH_2$-Gruppen im Polyamid zu Diepoxid-Gruppen beträgt 1 : 0,8.

Nach der Zugabe des diprimären Epoxides wurde die Rührdrehzahl auf 100 UpM erhöht und weitere 60 Minuten nachkondensiert. Anschließend wurde bei 220°C in einem Wasserbad ausgesponnen und granuliert.

Das erhaltene Produkt hatte die in der nachfolgenden Tabelle aufgeführten Meßwerte Das Granulat wurde vermahlen und gesiebt. Die Kornfraktion 80 bis 200 µm wurde textiltechnologisch untersucht. Die Ergebnisse finden sich in der nachfolgenden Tabelle.

Beispiel 2

Wie im Beispiel 1 beschrieben wurden folgende Komponenten eingewogen:

10000 g Caprolactam
10000 g 11-Aminoundekansäure
10000 g Laurinlactam
4757 g 82%ige wäßrige Hexamethylendiaminlösung
6205 g Azelainsäure
1800 g Octadecylamin
200 g Wasser

und, wie im Beispiel 1 beschrieben, polykondensiert. Nach der dreißigminütigen Nachkondensation bei 260°C wurde bei dieser Temperatur ausgesponnen und granuliert. Von dem erhaltenen Granulat wurden die physikalischen Meßwerte ermittelt (siehe Tabelle).

Nach dem Trocknen des Granulates wurden

13050 g unter Stickstoffspülung aufgeschmolzen und auf 190°C erwärmt.

Zu dieser Schmelze wurden innerhalb von 30 Minuten unter Rühren bei 50 UpM

467 g des Epoxides des Beispiels 1 gegeben (Molverhältnis $NH_2$/Epoxid = 1/0,924).

Nach Erhöhung der Drehzahl auf 100 UpM wurde noch 20 Minuten nachkondensiert. Anschließend wurde ausgesponnen, granuliert und vermahlen. Nach dem Absieben wurde wie im Beispiel 1 beschrieben textiltechnologisch untersucht. Die ermittelten Werte finden sich in der nachfolgenden Tabelle.

Beispiel 3

Wie im Beispiel 1 beschrieben wurden folgende Komponenten eingewogen:

2849 g Piperazin
6116 g Dekandisäure
1239 g Azelainsäure
1800 g 11-Aminoundekansäure
541 g Octadecylamin
200 g Wasser

Nach dem Aufheizen auf 255°C wurde bei 27 bar 1,5 Stunden vorkondensiert. Anschließend wurde innerhalb von zwei Stunden abgespalten und unter Stickstoffstrom bei 50 UpM und 260°C nachkondensiert, wobei gegen Ende der Nachkondensationszeit auf 170°C abgekühlt wurde. Danach wurden innerhalb von 5 Minuten

374 g Epoxid entsprechend Beispiel 1

bei 100 UpM zugegeben und unter Stickstoffstrom weitere 60 Minuten gerührt (Molverhältnis $NH_2$/Epoxid: 1/1,4).

Anschließend wurde wie im Beispiel 1 beschrieben granuliert, vermahlen, gesiebt und untersucht. Die Werte finden sich in nachfolgender Tabelle.

Beispiel 4

Wie im Beispiel 1 beschrieben wurden folgende Komponenten eingewogen:

| | |
|---|---|
| 3600 g | Caprolactam |
| 4400 g | 11-Aminoundekansäure |
| 1111 g | 80%ige Hexamethylendiaminlösung |
| 1114 g | Adipinsäure |
| 900 g | Octadecylamin |

und wie im Beispiel 2 beschrieben polykondensiert und granuliert (Werte siehe Tabelle).

300 g des getrockneten Granulates wurden aufgeschmolzen und unter Rühren bei 200°C und 100 UpM innerhalb von 10 Minuten mit 44,3 g $\alpha,\alpha$-Diepoxiddimethylpolysiloxan (Molgewicht = 850) versetzt und 90 Minuten bei 220°C gerührt (Molverhältnis $NH_2$/Epoxid: 1/1,0).

Anschließend wurde, wie im Beispiel 1 beschrieben, granuliert, vermahlen, gesiebt und untersucht. Die Werte finden sich in nachfolgender Tabelle.

**Vergleichsbeispiel 1** (Gemäß EP-B-174 225)

Wie im Beispiel 2 der EP-B-174 225 beschrieben wurden die gleichen Monomeren und Monomermengen eingewogen und polykondensiert.

1000 g des trocknen Granulates wurden mit 79,5 g des unter Beispiel 2 der EP-B-174 225 beschriebenen Diepoxides in der Schmelze bei 190°C polykondensiert (das Molverhältnis Polyamid:Diepoxid = 1:2): Es ließ sich keine homogene Mischung Polyamid/Epoxid herstellen, da die Schmelze innerhalb von 5 Minuten vernetzte. Da sehr hochviskose (vernetzte) Produkte textiltechnisch nicht als Klebstoffe einsetzbar sind, wurde von einer weiteren Untersuchung abgesehen.

**Vergleichsbeispiel 2**

Ein handelsüblicher Textil-Heißschmelzkleber auf Basis eines Polyamids mit der folgenden Zusammensetzung wurde textiltechnologisch untersucht und mit dem erfindungsgemäß verwendeten Heißschmelzkleber verglichen. Die Werte sind in der nachfolgenden Tabelle angegeben.

Der Heißschmelzkleber des Vergleichsbeispieles 2 hatte die folgende Zusammensetzung, bezogen auf Gewichtsteile an Monomeren:

25 Gew.-Teile Caprolactam
25 Gew.-Teile äquimolares Addukt aus Hexamethylendiamin/Azelainsäure
25 Gew.-Teile 11-Aminoundekansäure
25 Gew.-Teile Laurinlactam.

Die Ergebnisse der textiltechnologischen Untersuchungen sind in der folgenden Tabelle gezeigt.

## TABELLE

| | Beispiel 1 | Beispiel 2 | Beispiel 3 | Beispiel 4 | Vergleich 2 |
|---|---|---|---|---|---|
| Zusammensetzung<br>Gew.Teile | 25 GewT 6<br>25 GewT 6.9<br>25 GewT 11<br>25 GewT 12<br>4,5 GewT Octadecylamin | wie 1 | 70 GewT PIP 12<br>15 GewT PIP 9<br>15 GewT 11<br>4,5 GewT Octadecylamin | 36 GewT 6<br>20 GewT 6.6<br>44 GewT 11<br>9 GewT Octadecylamin | 25 GewT 6<br>25 GewT 6.9<br>25 GewT 11<br>25 GewT 12 |
| FP (°C) | 83-92 | 85-92 | 107-109 | 117-120 | 80-90 |
| MFI (9/10 %) | 8 130°C | 4 130°C | 16 150°C | 8 150°C | 15 130°C |
| MG | 6300 | 4850 | 5100 | 2900 | --- |
| Einlage | 4561 | 4561 | 4561 | 4561 | 4561 |
| Oberstoff | HAKA/NINO | HAKA/NINO | HAKA/NINO | HAKA/NINO | HAKA/NINO |
| Auftrag ($g/m^2$) | 16 | 15 | 13-14 | 13-14 | 15 |
| MG Epoxid | 378 | 378 | 378 | 850 | --- |
| Verhältnis | $NH_2$/PA/EP | $NH_2$/PA/EP | PA/EP | $NH_2$/PA/EP | $NH_2$/PA/EP |
| Gruppen in Mol $NH_2$/Epoxy | 1:0.8 | 1:0.9 | 1:1.4 | 1:1.0 | --- |
| **NRF/Rückschlag °C** | | | | | |
| 100 | | | | | |
| 110 | 4.5 6 | 6 7.5 | | | 7.5 3 |
| 120 | 7.5 8 | 7.5 10 | 9 2 | | 10 3 |
| 130 | 9.0 9 | 10.5 16.5 | 10.5 4.5 | 9.5 9 | 10.5 3 |
| 140 | 10.5 9 | 10.5 13 | 15 2 | 13.5 20 | 11 3 |
| 150 | 10.5 10 | 12 13 | 13 | 13 13 | 13.5 3 |
| 160 | | | 15 4 | 13 15 | |
| **Naßwäsche °C** | | | | | |
| 100 | | | | | |
| 110 | 4.5 9 | 4.5 7.5 | | | 4.5 2 |
| 120 | 6 8 | 6 8 | 7.5 2 | | 7.5 2 |
| 130 | 10 12 | 8 10.5 | 10.5 3 | 7.5 8.5 | 10.5 2 |
| 140 | 10 12 | 9.5 11 | 12 2 | 11 12 | 11 2 |
| 150 | 13 12 | 11 11 | 13 3 | 10.5 12 | 14 2 |
| 160 | | | 14 3 | 11 14 | |
| **Chem. Reinigung °C** | | | | | |
| 100 | | | | | |
| 110 | 4.5 9 | 3 9 | | | 5 3 |
| 120 | 7.5 10 | 4.5 6 | 9 2 | | 7.5 3 |
| 130 | 7.5 12 | 6 7 | 9 3 | 5 9.5 | 7.5 3 |
| 140 | 10 13 | 7.5 8 | 10.5 4 | 7.5 12.5 | 9 3 |
| 150 | 10.5 13 | 7.5 8 | 11 4 | 7.5 12 | 10.5 3 |
| 160 | | | 12 4 | 9 14 | |

Erläuterungen:

In der obigen Tabelle haben die Abkürzungen die folgende Bedeutung:

| | | |
|---|---|---|
| 6 | = | Caprolactam |
| 6.9 | = | äquimolares Addukt aus Hexamethylendiamin und Azelainsäure |
| 11 | = | 11-Aminoundekansäure |
| 12 | = | Laurinlactam |
| PIP 12 | = | äquimolare Mengen Piperazin und Dekandicarbonsäure |
| PIP 9 | = | äquimolare Mengen Piperazin und Azelainsäure |
| 6.6 | = | äquimolare Mengen Hexamethylendiamin und Adipinsäure |
| FP | = | Schmelzpunkt in $^oC$ |
| MFI(g/10 min) | = | Schmelzflußindex |
| Einlagestoff 4 5 6 1 | = | Baumwolle/Polyester - Mischgewebe |
| Oberstoff HAKA/ NINO Baumwolle/ Polyester 65/ 35 | = | silikonisierter Oberstoff |
| NRF | = | Normalreißfestigkeit |

In der Tabelle sind die Rückschlagswerte für die erfindungsgemäßen verwendeten Heißschmelzkleberzusammensetzungen nicht enthalten, da kein Rückschlag bei den erfindungsgemäßen Verklebungen festzustellen war.

**Patentansprüche**

**1.** Verwendung eines Reaktionsproduktes aus niedrigmolekularen Polyamiden und Diepoxiden zum Heißsiegeln von Textilien, **dadurch gekennzeichnet**, daß das Reaktionsprodukt erhältlich ist durch Umsetzung von folgenden Komponenten:
(A) Polyamiden mit einem Schmelzpunkt von 70 bis 140°C und mit nur einer terminalen primären oder sekundären Aminogruppe pro Molekül, die folgende Grundbausteine enthält:
1. bis zu 40 Gew.-% Aminocapronsäure und/oder deren Lactamform
2. bis zu 45 Gew.-% 11-Aminoundekansäure
3. bis zu 45 Gew.-% Laurinlactam
4. bis zu 85 Gew.-% äquimolaren Mengen primärer und/oder sekundärer $C_2$-$C_{20}$-Diamine und/oder Etherdiamine und aliphatischer $C_2$-$C_{44}$-Dicarbonsäuren, die in einer Menge von bis zu 20 Gew.%, bezogen auf das Gesamtgewicht der Dicarbonsäuren, durch aromatische Dicarbonsäuren ersetzt sein können,
wobei die niedrigmolekularen Polyamide (A) ein Molekulargewicht (Mn) von 1000 bis 10000 haben, das durch Zusatz von monofunktionellen $C_4$-$C_{24}$ Aminen zur Ausgangsmischung der Grundbausteine eingestellt wird, und zwei, drei oder vier Grundbausteine zur Herstellung der Copolyamide verwendet werden, wobei die Grundbausteine A1 bis A4
zusammen 100 Gew.-% der Komponente A) ergeben, und
(B) Diepoxiden, die ausgewählt werden aus der Gruppe, die besteht aus
1. Diepoxiden der allgemeinen Formel

E - D - E

wobei E ein Epoxidrest mit 2 bis 10 Kohlenstoffatomen bedeutet, und D ein aliphatischer Rest mit 2 bis 20 Kohlenstoffatomen, ein aromatischer und/oder alicyclischer Rest mit 6 bis 30 Kohlenstoffatomen oder

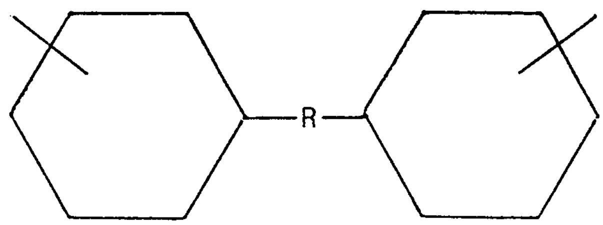

bedeutet, wobei R für

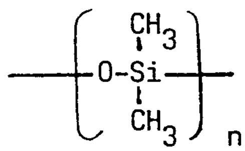,

worin n eine Zahl von 5 bis 30 ist, oder $-C(CH_3)_2-$, $-C_mH_{2m}-$ oder $-(C_mH_{2m})-O-$ steht, worin m eine Zahl von 2 bis 4 ist;

2. Diepoxiden auf Basis von Bisphenol A und Epichlorhydrin mit einem Molekulargewicht (Mn) von 340 bis 3000;

3. α,ω-Diepoxipolypropylen- oder -ethylenglykolen mit einem Molekulargewicht (Mn) von 500 bis 3000;

4. α,ω-Diglycidilpolydimethylsiloxanen mit einem Molekulargewicht (Mn) von 800 bis 5000;

und das Mengenverhältnis der niedrigmolekularen Polyamide (A) zu den Diepoxiden (B) so ausgewählt wird, daß das molekulare Verhältnis von reagierenden Aminogruppen der Komponente (A) zu den mit den Aminogruppen reagierenden Epoxidgruppen der Komponente (B) im Falle von primären Aminen 1:0,5 bis 1:1 und im Falle von sekundären Aminen 1:0,8 bis 1:2 beträgt.

**2.** Verwendung nach Anspruch 1, dadurch gekennzeichnet, daß die niedrigmolekularen Polyamide (A) ein Molekulargewicht (Mn) von 2000 bis 6000 besitzen.

**3.** Verwendung nach Anspruch 1 oder 2, dadurch gekennzeichnet, daß das Molekulargewicht (M$\bar{n}$) der niedrigmolekularen Polyamide (A) durch Zusatz von monofunktionellen $C_{10}$-$C_{18}$ Aminen eingestellt ist.

**4.** Verwendung nach einem der Ansprüche 1 bis 3, dadurch gekennzeichnet, daß die Diepoxide (B2) solche mit einem Molekulargewicht (M$\bar{n}$) von 340 bis 1000 sind.

**5.** Verwendung nach einem der Ansprüche 1 bis 3, dadurch gekennzeichnet, daß die Diepoxide (B4) solche mit einem Molekulargewicht (M$\bar{n}$) von 800 bis 2100 sind.

**6.** Verwendung nach einem der Ansprüche 1 bis 3, dadurch gekennzeichnet, daß die Diepoxide (B3) solche mit einem Molekulargewicht (M$\bar{n}$) von 800 bis 2000 sind.

**7.** Verwendung nach einem der Ansprüche 1 bis 6, dadurch gekennzeichnet, daß die niedrigmolekularen Polyamide (A) dadurch erhältlich sind, daß die Grundbausteine in den im Anspruch 1 genannten Mengenverhältnissen unter Druck und erhöhter Temperatur in an sich bekannter Weise vorpolymerisiert und danach mit Diepoxiden (B) umgesetzt werden.

**8.** Verwendung nach Anspruch 7, dadurch gekennzeichnet, daß die Heißschmelzkleber-Zusammensetzung durch Umsetzung der Komponenten (A) und (B) in einem Reaktionsextruder erhältlich ist.

**9.** Verwendung nach einem der Ansprüche 1 bis 8 zum Heißsiegeln von silikonisierten Textilien.